Europäisches Patentamt

European Patent Office

Office européen des brevets

(11) Publication number: **0 597 171 A1**

# EUROPEAN PATENT APPLICATION

(21) Application number: **93106787.0**

(22) Date of filing: **27.04.93**

(51) Int. Cl.5: **G11B 5/584**

(30) Priority: **04.11.92 US 971467**

(43) Date of publication of application:
**18.05.94 Bulletin 94/20**

(84) Designated Contracting States:
**DE FR GB**

(71) Applicant: **TANDBERG DATA A/S**
**Kjelsasveien 161**
**Postboks 9 Korsvoll**
**N-0808 Oslo 8(NO)**

(72) Inventor: **Solhjell, Erik**
**Konvallvn 30**
**N-00855 Oslo 8(NO)**
Inventor: **Jahren, Rolf**
**Bergradveien 29**
**N-0873 Oslo(NO)**

(74) Representative: **Goddar, Heinz J., Dr. et al**
**FORRESTER & BOEHMERT**
**Franz-Joseph-Strasse 38**
**D-80801 München (DE)**

(54) **Improved system for read head positioning.**

(57) A method for positioning a read head substantially at a center line of a track of recorded data. Error correction information is provided in recorded data on the track, preferably in conjunction with blocks. A length of the track over which error correction information will be accumulated is defined, such as over a given number of the blocks. At a starting position of the read head, a number of errors is counted which occurs over said defined length. If the number of errors counted exceeds a preset maximum, repositioning the head to a new position, and again counting a number of errors which occur over the defined length, and determining if the number of errors still exceeds the preset maximum. The repositioning is performed until the number of errors over the given length no longer exceeds the preset maximum, the preset maximum being chosen so that when the preset maximum is no longer exceeded, the read head then substantially overlies the center line of the track where a minimized number of read errors occurs.

FIG. 5

```
                    ┌─────────────────────┐
                    │ SET NUMBER OF BLOCKS │──23
                    │ TO BE READ FOR ERRORS│
                    └─────────────────────┘
                              │
                    ┌─────────────────────┐
                    │ COUNT NUMBER OF ERRORS│
                    │ FOR STARTING POSITION OF│──24
                    │ READ HEAD            │
                    └─────────────────────┘
                              │
                          ╱ DOES ╲  ,25
                    NO  ╱ NUMBER OF ╲
                   ◄───╱ ERRORS EXCEED PRESET╲
                        ╲   MAXIMUM ?      ╱
                          ╲            ╱
                              │ YES
                    ┌─────────────────────┐
                    │ REPOSITION HEAD TO NEW│
                    │ POSITION TO ATTEMPT TO│
                    │ REDUCE NUMBER OF ERRORS│──26
                    └─────────────────────┘
                              │
                    ┌─────────────────────┐
                    │ STOP REPOSITIONING WHEN│
                    │ NUMBER OF ERRORS FALLS │
                    │ BELOW PRESET MAXIMUM- │──27
                    │ TRACK CENTERLINE NOW  │
                    │ APPROXIMATED          │
                    └─────────────────────┘
```

## BACKGROUND OF THE INVENTION

In magnetic or optical data storage systems, data is typically stored along tracks recorded on the media. For example, on magnetic disks, data is typically written on circular tracks with the recording head moved a certain distance for each new track to be recorded. The same principle is used for optical disks where tracks normally are defined either by circular grooves pressed into the disk surface or by the stepping of the recording head a certain distance for each new track to be recorded. For magnetic tape using longitudinal recording, data is written on tracks along the length of the media. For tape systems using helical scan technology like in video recording, data is written on tracks which crosses over the tape width at a predefined angle.

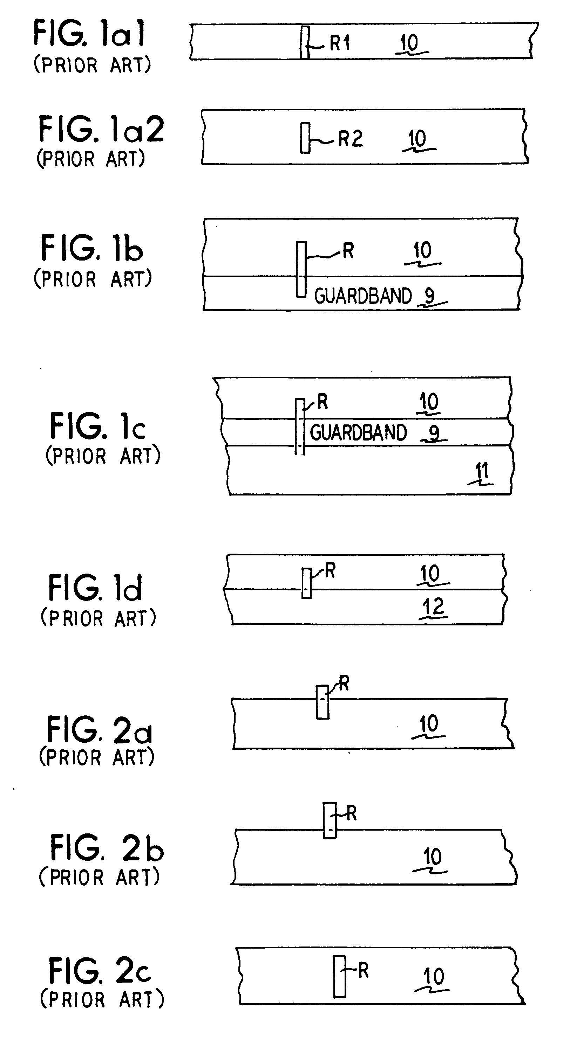

Regardless of this, the system designer needs to design the system so that the data can be reliably read back later. To achieve this, it is important to be able to position the read head so that it follows the recorded data track in the best possible way. Figures 1a and 1b show some examples.

Figures $1a_1$ and $1a_2$ show two situations where the read head R1 is placed in an optimum position in order to read the data on the recorded track 10. The read head R1 (Figure $1a_1$) is of a type which has the same width as the recorded track 10, while read head R2 (Figure $1a_2$) is smaller than the recorded track 10. In both cases, the designer will try to design the system so that the center of the read head normally stays as close to the center of the recorded track as possible. In such a case, readings should not be a problem.

Figure 1b shows the situation where the read head R is partly outside the recorded track 10. In this case, the signal level will be lower, but if the guard band area 9 (the area surrounding the recorded track) is erased, the system may still be able to read the data on the track correctly. However, in this case, the margins are reduced.

Figure 1c is a situation where the read head R is far off the track 10 from where it should be, and is actually partly into a neighboring track 11. In this case, the read operation on track 10 will be very marginal or impossible, since the read operation will be distorted by noise coming from track 11. Even in the case of some video tape recording where every other track is written with alternate azimuth to avoid distortion from a neighboring track, a situation like Figure 1c often results in very marginal recordings.

In Figure 1d the situation is even more sensitive to the read head R being off track 10. In this case, the tracks 10 and 12 are written with no, or at best only a very small, guard band, and (except in the case of alternate azimuth recording) a read head R placed somewhat outside track 10 will immediately pick up noise from the data on track 12.

Therefore, all data systems are designed to keep the read head in the best possible position along the track to be read. For many years, magnetic disk systems have achieved this by using some form of servo system, so that the read head can follow any variation in the position of the recorded track. Likewise, optical disks often use a laser system to follow a groove on the disk surface for each individual track.

Some professional tape systems are also designed to use some form of servo to keep the read head on track. However, most systems still do not use servo, as this typically will increase system complexity and therefore cost quite dramatically. Many systems, like the QIC (quarter inch cartridge) systems, typically rely on the built-in tolerances of the system itself. This may often be further improved by the use of a read retry system which normally is designed as outlined below.

The data is always recorded in groups or blocks. Each block of data has some special characters (commonly known as CRC characters in the prior art), which can be used to quickly determine if the block has been read correctly. If the system then fails to read a block, it may try one or more re-read operations, sometimes with the head in the original position, and sometimes moved a certain distance away from the original position. Typically, systems have been designed to move, for example, a quarter of a track width in each direction. In this regard, see Figures 2a, 2b, and 2c.

Figure 2a shows the read head position during the original read operation which failed (bad CRC check). The read head R is partly outside the recorded track area 10 (but this is unknown to the drive itself since no servo operation is involved). The drive may make one or more retry operations on this block without moving the read head. If the read operation still fails, the drive typically will reposition the read head R into a new position as shown in Figure 2b. In this case, it moves the read head R upwards which just makes the whole situation worse. After one or more read attempts on the block in this position (which obviously will fail), the drive will move the head R to the opposite side as shown in Figure 2c. In this case, this will position the read head in a good position with respect to the recorded track 10, and the read operation will normally succeed. Most systems will then continue the read operation with the head in this new position.

This method of trying to read the block one or more times with the head moved a certain distance up or down from the original position, has worked quite well in many systems.

2

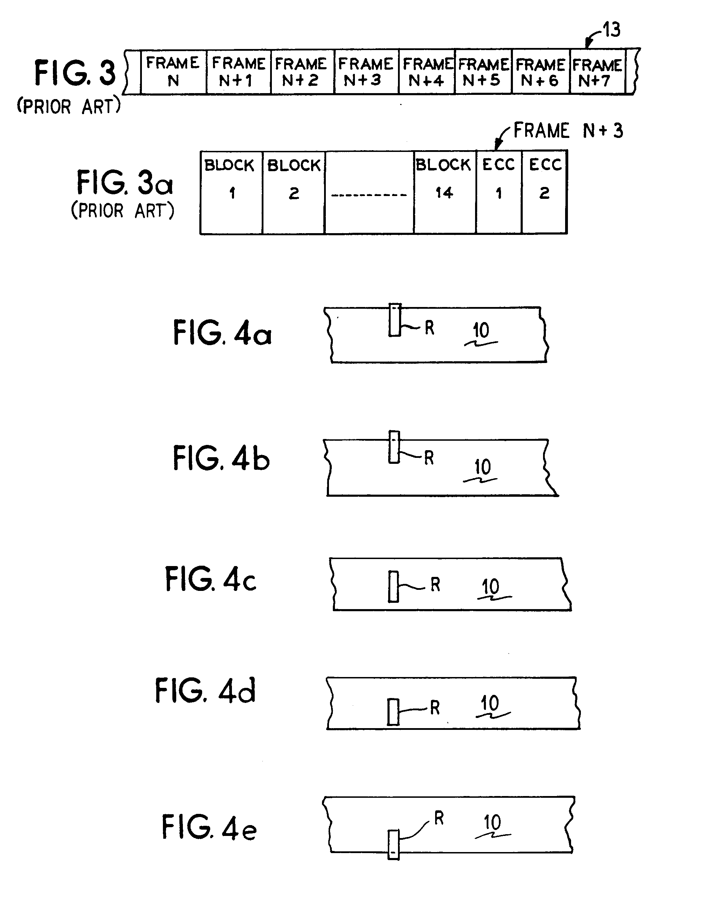

More powerful systems have also introduced special error correction methods to further improve the read operation. The type of error correction used varies with the different type of system and technology. Figure 3 shows a method commonly used for QIC tape formats. The data on each track 13 is split up in blocks as before. Additionally, however, blocks are grouped together in a frame, as shown for frame N + 3 in Figure 3a. Each frame consists of a certain number of data blocks plus some special error correction code blocks (ECC blocks). When reading a frame, one or more of the data blocks may be unreadable. They may then be reconstructed by using the other data blocks in the frame plus the ECC blocks.

Figure 3a shows a format with 14 data blocks and two ECC blocks per frame (for frame N + 3, for example). One or two data blocks in each frame may be corrected using this system. This may vary depending upon the format. However, the principle of the error correction system remains the same.

Systems equipped with such an error correction system normally rely on using the ECC to correct a badly read block (or several blocks) within each frame. Only in the case where the number of badly read blocks is higher than the error correction system itself can handle, will the drive additionally use the retry operation with repositioning of the read head as described in Figure 2.

For most systems, these methods are adequate. However, for systems having very high track density and/or no or just a small guard band between the tracks, the probability that the read head may be positioned incorrectly, and the system therefore needing to perform an off center read positioning as described in Figure 2, increases dramatically. This, however, will reduce the performance of the system; and for very high track density systems, it may not even be reliable enough.

In the context of a specific type of tape format, when reading what is known as a QIC2GB 42 track format, the drive will in some situations have the read head positioned partly outside the read track. Since there is no guardband alongside the neighboring track, the drive will, with the read head in this position, perform with many ECCs, or worse many rereads. In such situations it is necessary to perform a repositioning of the read head.

For the drive to perform well in such situations, it is required to perform a more intelligent repositioning that will effectively position the head at the center of the remaining track. This operation will then function as a very low frequency servo system.

## SUMMARY OF THE INVENTION

It is an object of the present invention to describe a new method to ensure that the read head stays in an optimum position and with the drive system seldom having to rely on reread operations. Although the method will be described based upon tapes with longitudinal recording, it may also be applied to helical scan systems, magnetic disk systems or optical disk systems.

According to the present invention, a method is provided for determining a center line of one or more tracks without the drive system having to rely on reread operations. The track has recorded on it data in the form of blocks. Associated with these blocks are special error correction information. For a given number of blocks, with the read head at a first position, the number of errors which occur within the given number of blocks is determined. If the number of errors exceeds a predetermined maximum, the head is positioned to a second new position and the number of errors is again determined for said given number of blocks. If the number of errors has decreased, then it is decided whether the new position of the head is acceptable or whether it is desired to approximate even more closely the center line of the track by further positioning and further error reading until the read head has been positioned sufficiently accurately to the center line of the track at which minimal reading errors occur.

## BRIEF DESCRIPTION OF THE DRAWINGS

Figure 1a$_1$ illustrates a prior art positioning of a read head R1 over a recorded track;
Figure 1a$_2$ illustrates a prior art positioning of a read head R2 over a recorded track;
Figure 1b is an illustration of prior art placement of a read head R over a track where a guard band is provided alongside the track;
Figure 1c shows prior art placement of a read head relative to first and second tracks with a guard band therebetween;
Figure 1d shows prior art placement of a read head over first and second tracks positioned directly adjacent one another;
Figure 2a shows prior art placement of a read head at an edge of a track where bad read operations and CRC failure occurs;

EP 0 597 171 A1

Figure 2b shows prior art positioning of a read head at an edge of a track with the head moved upwards and bad read operations and failing CRC occurring;

Figure 2c shows a prior art illustration of a track having the read head positioned centrally thereof after the head has been moved downwardly from an original position and wherein good read operation occurs with good CRC;

Figure 3 is a prior art illustration of a track having a plurality of frames and wherein, as shown in Figure 3a, each frame is comprised of a plurality of blocks and one or more ECC (error correction code) blocks;

Figure 4a shows positioning of a read head on a track according to the invention where the track is positioned slightly on a high side of the track;

Figure 4b shows positioning of a read head according to the invention on a track where the head is too high;

Figure 4c shows positioning of a read head according to the invention on a track close to a track center line;

Figure 4d shows positioning of a read head positioned on a low side of the track center line on a track according to the invention;

Figure 4e shows positioning of a read head at a lower edge where the head is too low relative to a track according to the invention;

Figure 5 is a block diagram showing method steps according to the invention for finding a center line of a track;

Figure 6a is a prior art illustration showing finding track center lines by head voltage output as it passes across the tape in each of the tracks, the tracks having guard bands therebetween;

Figure 6b shows a problem in the prior art of determining track center lines where the plurality of tracks do not have guard bands or only small guard bands therebetween wherein the head output does not distinguish between the various tracks;

Figure 7a shows method steps of a solution according to the invention for solving the problem shown in Figure 6b of determining track center lines by error detection where the tracks do not have guard bands, or only small guard bands, therebetween; and

Figure 7b shows an alternate method for determining center line of a plurality of tracks where the tracks do not have a guard band, or only a small guard band, therebetween.

## DESCRIPTION OF THE PREFERRED EMBODIMENTS

The invention is based upon the use of systems designed to record data in blocks and also data blocks grouped into frames. Additionally, each frame must contain special error correction information, so that one or more blocks in each frame may be corrected if the block(s) is read incorrectly, without having to perform a reread operation. Figure 3, as previously explained, shows one prior art example of such a layout. Those skilled in the art may easily define other arrangements which also meet these requirements.

According to the present invention, the number of blocks which have to be corrected by using ECC are looked at, are measured over a specified number of frames, and then the read head is repositioned to reduce this number as much as possible. Furthermore, it is also possible to use this method to determine the best position for the read head on each track, even in the case where the tracks are recorded with no guard bands at all.

The basic operation may be described as follows. The drive starts reading a track in what it believes to be the optimum position for the read head. Let us assume that the head R then is positioned somewhat too high as shown in Figure 4a. As it performs the read operation, the drive shall also monitor the number of blocks within a group of frames that are read badly and have to be corrected by using ECC. For example, if we assume a track and frame layout as shown in Figure 3, the drive is able to use ECC to correct up to 2 bad blocks in every frame. The drive may then count the number of blocks it actually has to correct over, for example 100 frames. Let us say that the number is 10. That gives an error ratio of 0.1 bad block per frame (10/100).

The drive will then try to see if it can improve the head position. It does so by gradually moving the head R to a new position, and in each case measuring the number of blocks in error per 100 frames. Figure 4b shows a situation where the drive has tried to move the head higher. In this case, the number of bad blocks will increase (often quite drastically). Let it be assumed that 50 blocks are found which need to be corrected, so that the error ratio has increased to 0.5 (50/100). This tells the drive that it probably is moving the head in the wrong direction. The drive will then move the head downwards and calculate the ratio at different positions. Let us assume that it tries three different positions as shown in Figures 4c, 4d, and 4e. The corresponding error ratios can be assumed to be 0.02 for Figure 4c, 0.07 for Figure 4d and 0.3 for

4

Figure 4e.

Since the drive knows the relative head position every time it makes a measurement, it is able to judge the best position for the read head with a high degree of accuracy. For example, it may use the results of the readings in position Figures 4a and 4e to determine the positions where the head is really far off on each side of the track center line. It may then use the result from positions as shown in Figures 4b and 4d to verify that, although these positions are better than the previous ones, they are still not optimum. Taking the average of these positions, however, will indicate a position close to that shown in Figure 4c as the best one. The drive may then perform a sample read in this position to verify that.

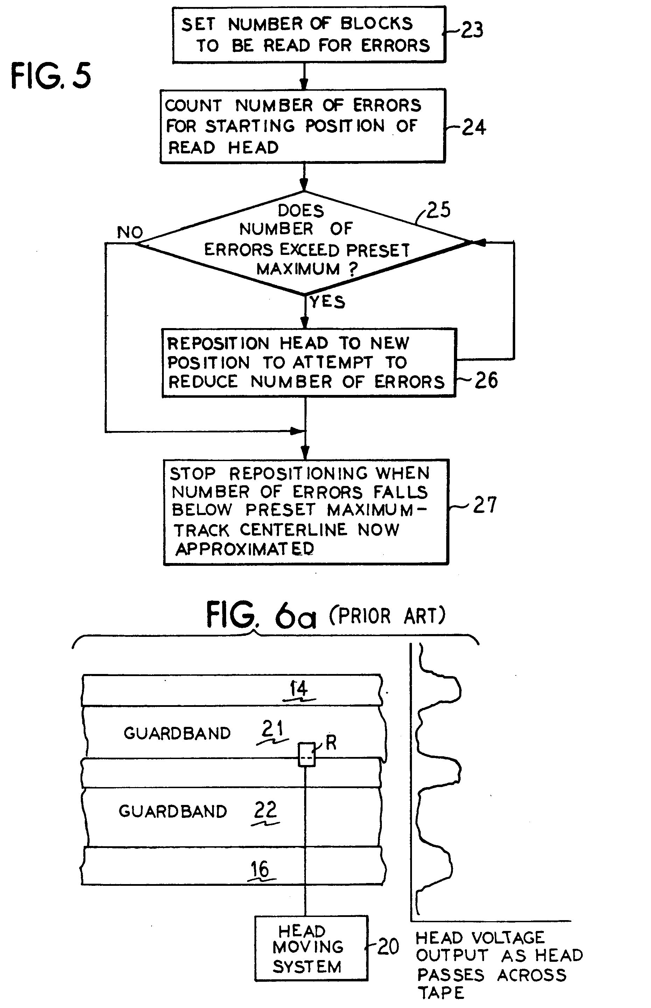

Figure 5 summarizes the method steps which are readily implementable by software for determining center line according to the invention. As shown at 23, first the number of blocks to be read for errors is set. If the number of errors does not exceed a predetermined maximum, then the method is stopped. On the other hand, if the number of errors does exceed the predetermined maximum, the head is repositioned in an attempt to reduce the number of errors. As shown at 24, the number of errors is again counted to determine whether the number of errors has now dropped below the maximum number, indicating that the read head is now positioned sufficiently close to the center line as desired. As shown in block 26, the repositioning stops when the number of errors is minimized according to the predetermined maximum. The above steps, of course, could be easily implemented by software.

Obviously, systems may be designed to verify far more head positions than the five discussed in Figure 4. Sometimes it may also be adequate to use only two or three positions to test whether the head is inside or outside the recorded track area.

As can be seen from the description above, the drive is able to find the correct (or at least close to optimum) position for the head while continuously reading the track. It is therefore normally not necessary to stop and do a retry operation which would reduce system performance.

Also, this operation can be carried on continuously. This will allow the drive to follow the recorded track if it should change its position (for various reasons like an incorrect append operation, sudden temperature change during write operation, etc.).

Obviously, the number of frames used to carry out the measurements should be selected based on particular system requirements and behavior. The number 100 used in the examples above has been selected arbitrarily. Specific requirements or behavior of a particular system design may require smaller or larger numbers; however, the basic principle remains unchanged.

The system may also be designed so that while constantly monitoring the error ratio as described above, it will not perform any physical head movement unless the ratio exceeds a predefined level. For example, in the example above, tests may have shown that the read head is typically close to one of the track edges when the ratio exceeds, for example, 0.08. Therefore, the drive may be designed in such a way that the head movement is only performed when the ratio exceeds 0.08.

The system may further be designed so that in the case where one or more frames contains the maximum (or close to the maximum) number of bad blocks which can be corrected using the ECC blocks (2 in the case of the format in Figure 3), the drive shall not wait for all 100 frames to be read, but will start moving the head in what it believes to be the best direction immediately.

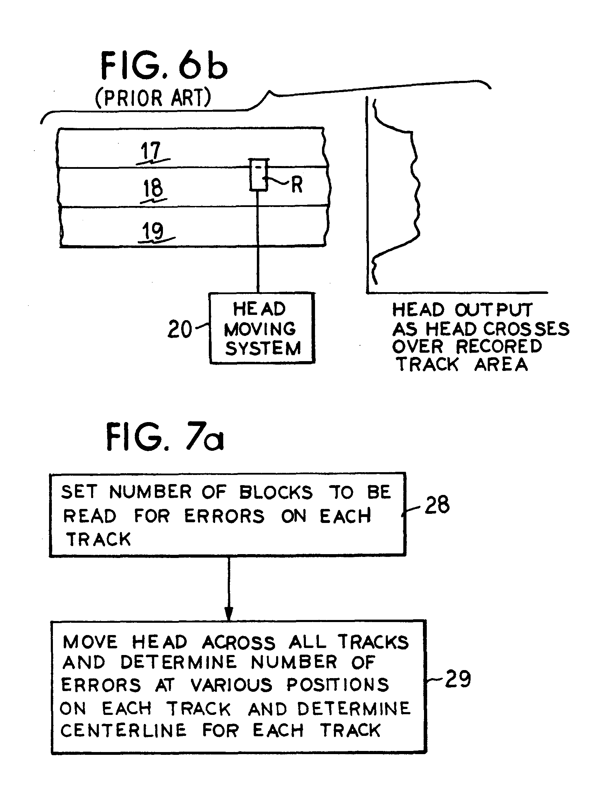

The basic principle of this invention may also be used to determine the center line of tracks which are recorded with very narrow guard bands or no guard bands at all. See Figure 6a and Figure 6b. In Figure 6a, tracks 14, 15, and 16 are recorded with fairly wide guard bands 21 and 22 therebetween. Therefore, the drive is able to determine the location of the center of each track by moving the head R across all the tracks with head moving system 20 (with the tape moving) and detecting the upper and lower edge of each track by looking at the signal level from the read head. The signal level will increase rapidly when moving from a position in the guard band area to a position over the lower edge of a track. In the same way, the signal output will be reduced rapidly when moving from a position over a track to a position mainly in the guard band area. The middle of the lower and upper edge detected in this way for each track then becomes the center position for that track.

In Figure 6b, the tracks 17, 18, and 19 are recorded with no guard band. Just moving the head R across the tape (while the tape is running) will produce a more or less constant signal output.

Therefore, just using the output levels from the head provides no information about the position of each track.

By using the invention as described before, this problem can easily be solved. As broadly described in Figure 7a, in this case, after setting the number of blocks for counting errors (block 28) the head is moved in adequately small steps across the whole tape area (block 29). At each position, the system tries to read, for example, 100 frames of the recorded track. This will give the drive the ability to calculate the error ratio as described earlier for each track at different head positions. Using this principle for every track as the head is stepped across the tape, the drive can calculate the correct center line position for each track. The drive can also verify the actual track number either by counting the number of tracks as it steps the head across the tape, or by reading the track number from information recorded in each block or frame.

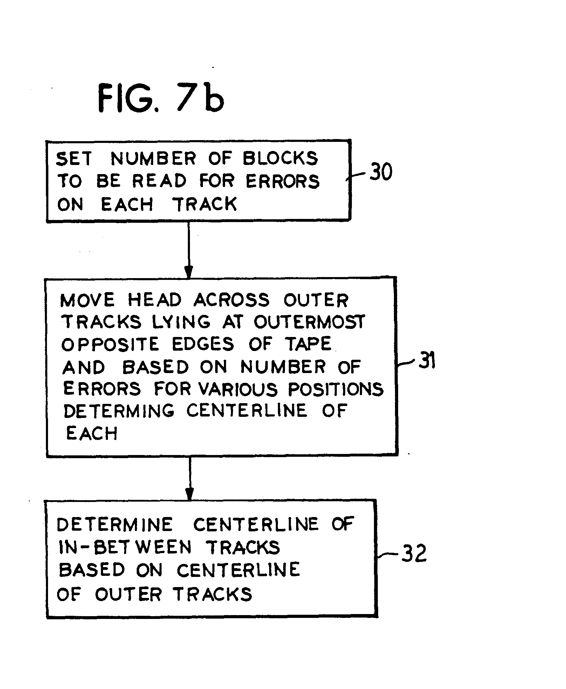

With a large number of recorded tracks, this operation may take a fairly long time. In this case, as shown in Figure 7b, after first setting the number of blocks (block 30), a more practical method is to position the head first at what the drive believes to be the nominal center line for a track close to the lower edge of the tape, perform the read operation, and determine the error ratio for a few read head locations within this track area as described before (block 31). The drive then moves the head to the nominal position for one of the tracks closest to the upper edge of the tape and repeats the position (block 31). The drive will then know the exact center line position of a track close to the lower edge of the tape and the exact center line position of a track close to the upper edge of the tape. With this information, the drive may then calculate the nominal positions for all the tracks in between these two tracks (block 32). When doing the actual reading along one of these tracks, it will, of course, still employ the described method to constantly determine if the position of the read head is getting critically close to one of the edges of the track.

**EXAMPLE**

An example of the repositioning method of the invention shall now be described. The repositioning method shall be performed when the drive ECC and reread performance indicate that the read head is incorrectly positioned. The method shall be started in the following situations.

A. There have been more than 3 ECC corrections over the last 128 frames.

B. There are 2 blocks in error in a frame. (Blocks in error means blocks that are in error after eventual rewritten blocks are read.)

C. There is a read retry situation.

Before the drive enters a read retry, the drive performs repositioning steps. The drive starts the read retry with the head in the position found after the repositioning and continues through an OFFSET table from this position. This differs from typical previous read retry methods where the drive always started the read retry with OFFSET equal to 0.

The repositioning steps detect the position where the read head is located partly into a neighboring track both below and above. These positions are found by checking the read performance vs. head position. The read performance drops significantly when the read head is 15um to 20um into the neighboring track. With the read head in this position, the "noise" from the neighboring track is at -12dB and this causes false zero crossings and extreme bit shift. According to the invention, the lowest and highest positions of the read head where at least 50% of the blocks are readable are detected as the lower and upper edges of the track. After finding the lower and upper edges of the track, the head is positioned in the center and a further reading is performed in this position. The reposition steps are performed on the data to be read after the repositioning has been triggered. During the repositioning, some data will always be missed. When the correct position is found, the tape is therefore rewound to the position where the repositioning was triggered and continuous reading occurs from this point.

Repositioning steps suitable for implementation by a computer program are as follows:

```
Original_OFFSET:=OFFSET
OFFSET:= -15
Pos head at Track_Pos+OFFSET;
```

Head is stepped 15 steps down from the nominal track position.

```
While (OFFSET < = 15)
  and (No End of recorded area detected)
  and (No End Of Track detected) do
begin
  Read for 1.65 inch (typ 8 blocks);
  Good_Block[OFFSET]:=number of correct blocks.
  OFFSET:=OFFSET+1;

  Pos head at Track_Pos+OFFSET;
end;
```

An array (Good-_Block[..] containing the number of readable blocks in each head position is generated.

```
For i:=-15 to +15 do
begin
  if (Good_Block[i] > =4) then
  begin
    Higher_Edge:=i;
    Higher_Found:=true;
    if Lower_Found=false then
    begin
      Lower_Edge:=i;
      Lower_Found:=true;
    end;
  end;
end;
```

The array (Good-_Block[..] is analyzed. The lowest and highest positions where 4 or more blocks are readable are defined as Lower_Edge and Higher_Edge respectively.

```
if (Lower_Found=Higher_Found=true)
  and (No End of recorded area detected)
  and (No End Of Track detected) then
begin
  OFFSET:=(Lower_Edge+Higher_Edge)/2;
  if OFFSET < -9 then OFFSET:= -9;
  if OFFSET > 9 then OFFSET:=9;
```

OFFSET is calculated as an average. Offset should never exceed +/-9.

```
end;
else
  OFFSET:=Original_OFFSET;

Pos Head at Track_pos + OFFSET;
```

Rewind to the tape position where the reposition method was triggered.

The repositioning method shall on the one hand be triggered on strict criteria to avoid the drive from running at a marginal position and thereby causing a lot of soft errors. On the other hand, it is important that the method is not triggered often from independent errors not caused by a marginal head position.

**Triggering criteria A**

The probability for a false triggering by a criteria A per full read operation is equal to the probability for 4 frames to have 1 block in error over 128 frames times the number of 128 frames per tape. Assuming the soft Block error rate ($P_{BLK}$) is $8.192*10^{-5}$ (corresponds to a soft error rate of $10^{-8}$), the probability for 1 block in error per frame (P1) is equal to:

$$P1 = (16!/(1!*15!))*(P_{BLK})^1 = 1.31 * 10^{-3}.$$

The probability for P1 to occur in 4 of 128 frames becomes: $P4 = (128!/(4!*124!))*(P1)^4 = 3.14 * 10^{-5}$.

A full 2GB cartridge has approximately 140000 frames so that the probability for a false triggering by criteria A per full read operation is:

$$PA = (140000/128)*P4 = 0.034.$$

In other words, statistically a false triggering by criteria A will occur for every 30 full read operations.

**Triggering criteria B**

The probability for a false triggering by a criteria B per full read operation is equal to the probability for 2 blocks to be in error in a single frame times the number of frames per tape. Assuming $P_{BLK}$ is $8.192*10^{-5}$, the probability for 2 blocks in error per frame is equal to:

$$P2 = (16!/(2!*14!))*(P_{BLK})^2 = 8*10^{-7}.$$

The probability for a false triggering by criteria B per full read operation becomes:

$$PB = P2*140000 = 0.112.$$

In other words, statistically a false triggering by criteria B will occur for every 10 full read operations.

These calculations show that the probability for false triggering of the repositioning method will not degrade the system performance with any significance.

Although this invention has been described on the basis of use with longitudinal recorded tapes, it may, as already mentioned, also be used with helical recorded tapes, magnetic disks, or optical disks.

Although various minor changes and modifications might be proposed by those skilled in the art, it will be understood that we wish to include within the claims of the patent warranted hereon all such changes and modifications as reasonably come within our contribution to the art.

The features disclosed in the foregoing description, in the claims and/or in the accompanying drawings may, both separately and in any combination thereof, be material for realising the invention in diverse forms thereof.

**Claims**

1. A method for positioning a read head substantially at a center line of a track of recorded data, comprising the steps of:

providing error correction information in recorded data on the track;

defining a length of the track over which error correction information will be accumulated;

at a starting position of the read head, counting a number of errors with said read head which occur over said defined length;

if the number of errors counted exceeds a preset maximum, repositioning the head to a new position, again counting a number of errors which occur over said defined length, and determining the number of errors still exceeds said preset maximum; and

performing said repositioning until the number of errors over said given length no longer exceeds the preset maximum, said said preset maximum being chosen such that when the preset maximum is no longer exceeded, the read head then substantially overlies the center line of the track where a substantially minimized number of read errors occurs.

2. A method according to claim 1 wherein information recorded on the track comprises a plurality of blocks having error code blocks associated with the data blocks and wherein said given length comprises a plurality of blocks together with error coding blocks.

3. A method according to claim 2 wherein a plurality of blocks and including at least one error coding block are grouped within a frame and wherein a plurality of said frames are provided as recorded data on said track.

4. A method according to claim 1 wherein when moving the read head from the first to the new position in a given direction, if a number of read errors increases, then reversing a direction of movement of the read head for subsequent repositioning.

5. A method according to claim 1 wherein the error coding comprises ECC (error correction coding).

6. A method according to claim 1 wherein a ratio of errors per number of data blocks contained on the tape over said defined length is formed for each position of the read head and the error ratios are then compared for the different positions.

7. A method according to claim 1 wherein a plurality of tracks are provided with substantially no guard band therebetween and wherein a track center is determined for each of the three tracks.

8. A method according to claim 1 wherein a plurality of tracks are provided and wherein a width of a guard band between the tracks is relatively small compared to a width of the track, and wherein a center line of each track is determined.

9. A method according to claim 1 wherein at least three tracks are provided with substantially no guard band therebetween and wherein a center line of the two outermost tracks are first determined and those center lines are employed for finding a center line of an in between track.

10. A method for positioning a read head closer to a center line of a track of recorded data, comprising the steps of:
    providing error correction information in recorded data on the track;
    defining a length of the track over which error correction information will be accumulated;
    at a starting position of the read head, counting a number of errors with said read head which occur over said defined length; and
    if the number of errors exceeds a predetermined maximum, repositioning the head to a new position and again counting a number of errors which occur over said given length to determine whether the read head has approached more closely to the center line as indicated by a decrease in a number of errors occurring when reading the tape over said given length.

FIG. 1a1
(PRIOR ART)

R1    10

FIG. 1a2
(PRIOR ART)

R2    10

FIG. 1b
(PRIOR ART)

R    10

GUARDBAND 9

FIG. 1c
(PRIOR ART)

R    10

GUARDBAND 9

11

FIG. 1d
(PRIOR ART)

R    10

12

FIG. 2a
(PRIOR ART)

R    10

FIG. 2b
(PRIOR ART)

R    10

FIG. 2c
(PRIOR ART)

R    10

FIG. 3
(PRIOR ART)

| FRAME N | FRAME N+1 | FRAME N+2 | FRAME N+3 | FRAME N+4 | FRAME N+5 | FRAME N+6 | FRAME N+7 |
|---|---|---|---|---|---|---|---|

13

FIG. 3a
(PRIOR ART)

FRAME N+3

| BLOCK 1 | BLOCK 2 | ---------- | BLOCK 14 | ECC 1 | ECC 2 |
|---|---|---|---|---|---|

FIG. 4a

R    10

FIG. 4b

R    10

FIG. 4c

R    10

FIG. 4d

R    10

FIG. 4e

R    10

11

FIG. 5

SET NUMBER OF BLOCKS TO BE READ FOR ERRORS ~23

↓

COUNT NUMBER OF ERRORS FOR STARTING POSITION OF READ HEAD ~24

↓

DOES NUMBER OF ERRORS EXCEED PRESET MAXIMUM ? ~25

NO →

YES ↓

REPOSITION HEAD TO NEW POSITION TO ATTEMPT TO REDUCE NUMBER OF ERRORS ~26

↓

STOP REPOSITIONING WHEN NUMBER OF ERRORS FALLS BELOW PRESET MAXIMUM - TRACK CENTERLINE NOW APPROXIMATED ~27

FIG. 6a (PRIOR ART)

14

GUARDBAND 21 ▢R

GUARDBAND 22

16

HEAD MOVING SYSTEM ~20

HEAD VOLTAGE OUTPUT AS HEAD PASSES ACROSS TAPE

12

## FIG. 6b
### (PRIOR ART)

17

18    R

19

20 — HEAD MOVING SYSTEM

HEAD OUTPUT AS HEAD CROSSES OVER RECORED TRACK AREA

## FIG. 7a

SET NUMBER OF BLOCKS TO BE READ FOR ERRORS ON EACH TRACK  — 28

MOVE HEAD ACROSS ALL TRACKS AND DETERMINE NUMBER OF ERRORS AT VARIOUS POSITIONS ON EACH TRACK AND DETERMINE CENTERLINE FOR EACH TRACK  — 29

# FIG. 7b

SET NUMBER OF BLOCKS
TO BE READ FOR ERRORS — 30
ON EACH TRACK

MOVE HEAD ACROSS OUTER
TRACKS LYING AT OUTERMOST
OPPOSITE EDGES OF TAPE
AND BASED ON NUMBER OF — 31
ERRORS FOR VARIOUS POSITIONS
DETERMING CENTERLINE OF
EACH

DETERMINE CENTERLINE OF
IN-BETWEEN TRACKS
BASED ON CENTERLINE — 32
OF OUTER TRACKS

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | PATENT ABSTRACTS OF JAPAN vol. 9, no. 195 (P-379)13 August 1983 & JP-A-60 059 572 (FUJITSU) 5 April 1985 * abstract * | 1,10 | G11B5/584 |
| A | | 2-9 | |
| A | DE-A-38 09 688 (BTS) * column 1, line 58 - column 3, line 33; figures * | 1-10 | |
| A | WO-A-91 04555 (KODAK) * page 6, line 10 - page 16, line 15; figures * | 1-10 | |
| A | EP-A-0 180 718 (GRUNDIG) * page 5, line 22 - page 17, line 5; figures * | 1,10 | |
| A | EP-A-0 069 548 (IRWIN INTERNATIONAL, INC.) * page 12, line 16 - page 38, line 10; figures * | 1,10 | TECHNICAL FIELDS SEARCHED (Int.Cl.5) |
| A | PATENT ABSTRACTS OF JAPAN vol. 13, no. 116 (P-845)22 March 1989 & JP-A-63 291 209 (NEC CORP.) 29 November 1988 * abstract * | 1,10 | G11B |

The present search report has been drawn up for all claims

| Place of search | Date of completion of the search | Examiner |
|---|---|---|
| THE HAGUE | 8 February 1994 | Geoghegan, C |

EPO FORM 1503 03.82 (P04C01)